# EUROPEAN PATENT APPLICATION

(11) **EP 1 389 665 A2**
(43) Date of publication of application: **18.02.2004**
(21) Application number: 03077115.8
(22) Date of filing: 04.07.2003
(51) Int. Cl.: E06B 7/12

(54) **Profile**

(30) Priority: 14.08.2002 SE 0202425
(71) Applicant: Santex AB, 301 80 Halmstad (SE)
(72) Inventor: Santesson, Per-Olof, 302 56 Halmstad (SE)
(74) Representative: Wallengren, Yngvar

(57) **Abstract**

The disclosure relates to a profile (4) for defining and framing an opening in a wall and the profile (4) serves as an anchorage for fixed or moving window or wall sections (1, 2, 3). The profile (4) has an outer portion (5) which is turned to face towards the surroundings on the outside of the wall and an inner portion (6) which is turned to face towards a space on the inside of the wall. The inner portion (6) of the profile (4) has a heating device, an electric heating cable, in a pocket (19).

## Description

### TECHNICAL FIELD

The present invention relates to a profile for defining and framing an opening in a wall, the profile serving as an anchorage for fixed or moving window or wall sections and having an outer portion which is turned to face towards the surroundings on the outside of the wall and an inner portion which is turned to face towards a space on the inside of the wall.

### BACKGROUND ART

In the glazing of verandas, winter gardens, balconies and the like, use is made of glass sections which may be movable or fixed and which may be formed as window or wall sections. In such situations where extreme demands are placed on thermal insulation, these glass sections often have energy saving glazing or insulating glass units. The glass sections have frames of aluminium profiles and are generally secured in an opening in a surrounding wall with the aid of suitably formed aluminium profiles which define or fame the opening.

Since aluminium is a metal which possesses superior thermal conductivity, attempts are made as far as this is possible to break the cold bridges which exist between the outsides and insides of the aluminium profiles employed. One method of realising this is to include, in the aluminium profile, certain parts which in thermal respects separate the outside from the inside and which, for example, may consist of plastic.

However, certain types of profiles, in particular those which frame the opening cannot be provided with such thermally insulating plastic spacers or plastic interlays but must, for reasons of mechanical strength or functional reasons, extend unbroken from the outside of the wall to its inside. As an example of such profiles, mention might be made of threshold profiles and lintel profiles which are employed in connection with sliding glass sections. In such instance, the threshold profile has upstanding rails on which the wheels of the glass sections roll. Correspondingly, the upper profile or lintel profile has guides along which the upper edges of the glass sections are guided.

If extreme temperature differences prevail during the winter between the outside and the inside of such a through-going profile, condensation of moisture from the warm and relatively humid indoor air may take place on the profile and may also freeze to hoar frost or ice on the profile.

Even just a cold profile is perceived as uncomfortable on contact. In serious cases, the buildup of hoar frost and ice may be so extreme that it is no longer possible to open and close the glass section or sections.

### PROBLEM STRUCTURE

The present invention has for its object to design the profile intimated by way of introduction such that the problems inherent in cold contact surfaces, condensation and the formation of hoar frost and ice are obviated. The present invention further has for its object to realise a profile which is aesthetically appealing and which is not excessively expensive.

### SOLUTION

The objects forming the basis of the present invention will be attained if the profile is characterised in that its inner portion has a heating device.

As a result of this feature, the major advantage will be afforded that the inner portion of the profile can, even in extremely cold weather, be at such an elevated temperature that it is not perceived as uncomfortable on contact and that condensation and the formation of hoar frost are avoided.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: shows a threshold section with the lower areas of three sliding glass sections; and
- Fig. 2: shows an upper or lintel profile which is employed for guiding the upper edges of the sliding glass sections, which are also shown schematically.

### DESCRIPTION OF PREFERRED EMBODIMENT

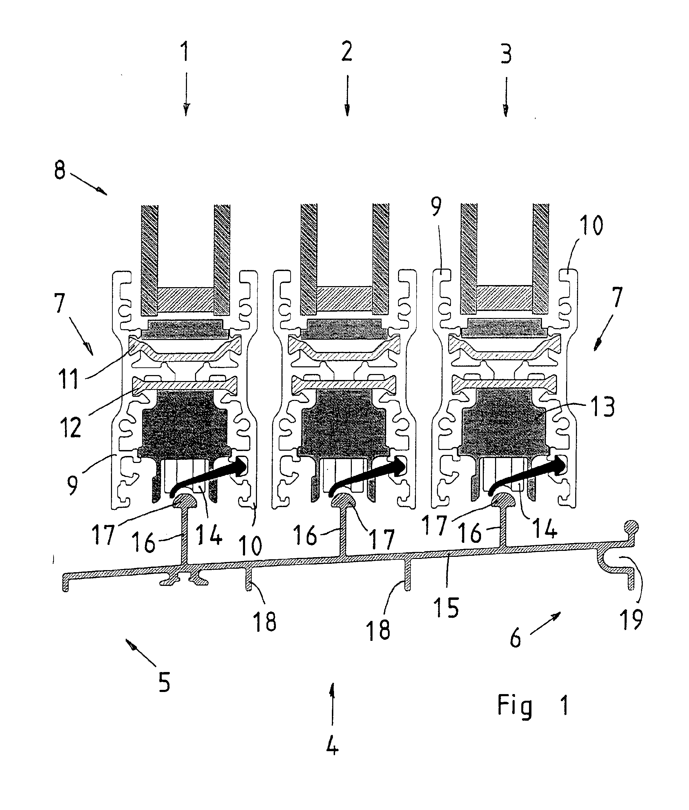

In Fig. 1, reference numerals 1, 2 and 3 relate to three sliding glass sections which are carried by a threshold profile 4. The threshold profile 4 is secured in and downwardly defines an opening in a wall (not shown) in a building. The threshold profile 4 has an outer portion 5 and an inner portion 6, where the outer portion is turned to face towards the surroundings on the outside of the wall, while the inner portion is turned to face towards a space on the inside of the wall.

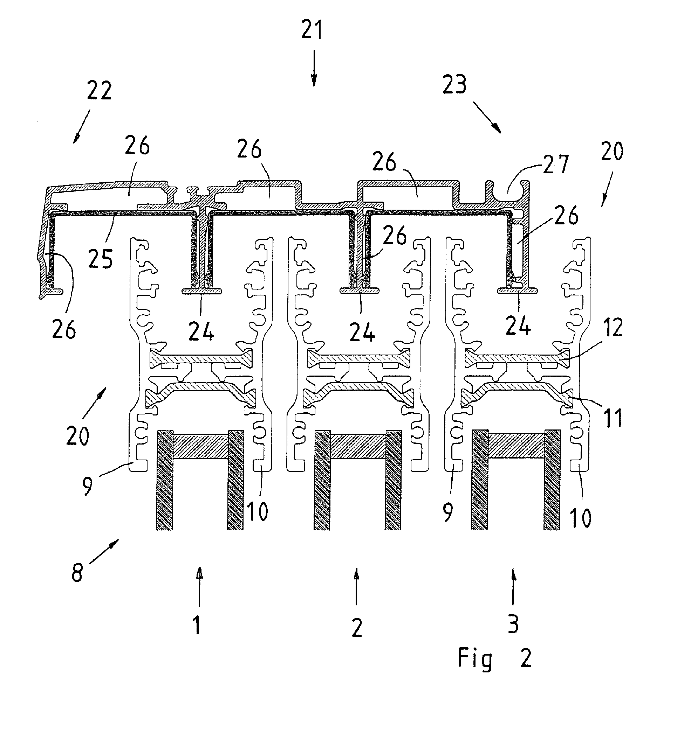

Each one of the sliding glass section 1, 2 and 3 has an insulating glass unit 8 and a lower bottom profile 7 as well as vertical side profiles (not shown on the Drawings). In addition, they display upper profiles 20 (Fig. 2).

The bottom profile 7, the upper profile 20 and the side profiles consist of an outer profile unit 9 and an inner profile unit 10 which are permanently united to one another by the intermediary of thermally insulating spacers 11 and 12. The thermal transfer from a warm inner profile unit 10 to a cold outer profile unit 9 can thereby by considerably restricted. Each bottom profile 7 in the sliding glass sections 1, 2 and 3 has, in a conventional manner, a number of spacers 13 with carrier rollers 14 which are intended to rollingly support each respective glass section. (In Fig. 1, the rollers 14 and the glass sections 1, 2 and 3 are shown in a slightly raised position for purposes of clarity.)

The threshold profile 4 has a base plate 15 which, in the illustrated embodiment, is substantially planar. The base plate 15 is of a width which is of the same order of magnitude as the thickness of the wall on whose outer surface it is placed. However, this width is so great that the outer portion 5 extends a distance beyond the outer surface of the wall so that the outer end of the outer portion will form a drip ledge. Correspondingly, the inner portion 6 is located at or inside the inner defining surface of the wall.

On its upper side, the threshold profile 4 has three upwardly directed beads 16 which extend in the longitudinal direction of the threshold profile 4 and which, in their respective upper ends, have roller paths 17 on which the carrier rollers 14 of the glass sections 1, 2 and 3 are intended to rest.

The base plate 15 has, on its underside, a number of support beads 18 which are intended to rest on the upper defining surface of the wall. The support beads 18 are formed in such a manner that the base plate 15 inclines downwards from the inner portion 6 to the outer portion 5. In order, for example, for rainwater which can get between the upwardly directed beads 16 when one or more of the sliding glass sections are open, to be led off, there are provided uniformly spaced apertures through the upwardly directed beads 16 immediately above the upper defining surface of the base plate 15.

In cold weather, the outer portion 5 of the threshold profile 4 will naturally be cold and will be at a temperature close to the outdoor temperature. Correspondingly, the temperature of the inner portion 6 is naturally affected by the indoor temperature on the inside of the wall. However, at sufficiently low outdoor temperatures, so much heat is led, because of the superior thermal conductivity of the profile material (aluminium), through the threshold profile from the inner portion 6 to the outer portion 5 where the heat is dissipated into the ambient surroundings, that the temperature of the inner portion falls to a level that is perceived as uncomfortable on contact. The temperature of the inner portion can, in extreme cases, be so low that condensation or hoar frost is formed on the threshold profile. Such formation of hoar frost or even ice may be so extreme that the movements of the glass sections are impeded or even prevented.

According to the present invention, the inner portion 6 of the threshold profile 4 is provided with a heating device which is intended to raise the temperature of the inner portion 6 of the threshold profile. Because of the superior thermal conductivity of the profile material, such a temperature increase will, naturally, have as a consequence that the base plate 15 will also be at a higher temperature in its areas facing towards the inside of the wall and, naturally, the outer areas of the base plate are also affected so that the temperature increases there as well. Probably, the temperature curve will be considerably steeper than would have been the case without the heating device. Under any circumstances, the threshold profile 4 will, for the greater part and also including the base plate 15, be at such a greatly elevated temperature that the formation of condensation, hoar frost and ice is prevented.

The heating device may extend throughout the entire length of the threshold profile 4 so that the inner portion 6 thereof will be continuously heated along its entire length. Alternatively, use may be made of a number of heating devices which are distributed with a certain spacing along the inner portion 6. Because of the superior thermal conductivity of the material of the threshold profile 4, the inner portion 6 will nevertheless be quite uniformly heated.

The heating device is dimensioned in such a manner that, in reasonable weather conditions, it guarantees that the inner portion 6 of the threshold profile 4 is kept free of condensation and hoar frost but also preferably at such a temperature that contact with it is not perceived as unpleasant. Depending on the temperature conditions, the power output of the heating device and the thermal conductivity of the base plate 15, it is, as was intimated above, also possible to ensure that condensation and freezing are eliminated also on such areas of the base plate which lie close to the outer portion 5.

In the embodiment shown on the Drawings, the threshold profile has, at its inner portion 6, a longitudinal pocket 19 in which an electric heater cable (not shown) is disposed. The heater cable is suitably of the self-regulating type so that there is no risk of overheating.

In an alternative embodiment, the heating device may include a heat collector which is exposed to the warm indoor air and which is disposed to take up heat from it and transfer the heat to the threshold profile 4. In one practical embodiment, such a collector may consist of surface area enlarging devices in the form of projecting strips, flanges or the like.

In Fig. 2, reference numerals 1, 2 and 3 refer, as was the case above, to three sliding glass sections of which only the upper areas are shown. The glass sections 1, 2 and 3 have, as was mentioned above, upper profiles 20 which are each composed of outer profile members 9 and inner profile members 10 which are united by the intermediary of thermally insulating spacers 11 and 12. Consequently, the construction is completely analogous with that of the bottom profile 7.

At the lower defining surface of the wall facing towards the opening, there is provided a lintel 21 which includes an extruded aluminium profile which, in analogy with the threshold profile 4, has an outer portion 22 and an inner portion 23. The outer portion 22 is turned to face the surroundings on the outside of the wall, while the inner portion 23 is turned to face towards a space on the inside of the wall.

On the underside, the lintel 21 has longitudinal and downwardly directed guide beads 24 which are accommodated on sliding guides (not shown on the Drawing) on the upper profiles 20 of the glass sections. Further, there are on the underside of the lintel 21, a number of cladding members 25 produced from thermally insulating material and at least partly preventing direct contact between the metal parts of the lintel 21 and the cold outdoor air. The cladding members 25 are formed in such a manner that a number of air pockets are created between the cladding members and the metal components of the lintel 21. These air pockets 26 are designed to reduce thermal transfer from the inner portion 23 of the lintel 21 to its outer portion 22.

Like that which applied to the threshold profile 4, the lintel 21 also has, at its inner portion 23, a heating device which may also here be designed in the form of a self-regulating electric heating cable which is accommodated in a longitudinal pocket 27 in the inner portion 23. The function of the heating device of the lintel 21 is completely analogous with that which applied to the threshold profile 4 and, as a result, need not be described in greater detail here.

The lintel 21 may also have a heat collector which takes heat from the warm indoor air. Further, the heating device may include a plurality of small sources of heat which are disposed in spaced apart relationship along the inner portion 23 of the lintel 21.

## Claims

1. A profile for defining and framing an opening in a wall, the profile (4, 21) serving as an anchorage for fixed or moving window or wall sections (1, 2, 3) and having an outer portion (5, 22) which is turned to face towards the surroundings on the outside of the wall and an inner portion (6, 23) which is turned to face towards a space on the inside of the wall, **characterised in that** the inner portion (6, 23) of the profile is provided with a heating device.

2. The profile as claimed in Claim 1, **characterised in that** the profile (4, 21) has a pocket (19, 27) for accommodating an electric heating cable.

3. The profile as claimed in Claim 2, **characterised in that** the heating cable is of the self-regulating type.

4. The profile as claimed in any of Claims 1 to 3, **characterised in that** it is produced from a material possessing superior thermal conductivity.

5. The profile as claimed in Claim 4, **characterised in that** it consists of aluminium.
